# EUROPÄISCHE PATENTSCHRIFT

(11) **EP 0 556 593 B1**
(45) Veröffentlichungstag und Bekanntmachung des Hinweises auf die Patenterteilung: **24.04.1996**
(21) Anmeldenummer: 93101029.2
(22) Anmeldetag: 23.01.1993
(51) Int. Cl.: H02P 9/08, F02B 41/10

(54) **Gasturbinenanlage**
Gas turbine plant
Turbine à gaz

(30) Priorität: 20.02.1992 CH 513/92
(43) Veröffentlichungstag der Anmeldung: 25.08.1993
(73) Patentinhaber: ASEA BROWN BOVERI AG, CH-5401 Baden (CH)
(72) Erfinder: Kizina, Wolfgang, CH-5406 Baden-Rütihof (CH); Mutter, Alexander, W-7883 Görwihl (DE); Rupp, Markus, W-7890 Waldshut (DE); Vogt, Paul, CH-5303 Würenlingen (CH); Widenhorn, Markus, CH-8955 Oetwil (CH); Nissen, Matthias, W-2000 Hamburg 20 (DE)
(74) Vertreter: Rzehak, Herbert

(56) Entgegenhaltungen:
- EP-A- 0 398 138
- DE-A- 3 705 310
- DE-A- 3 900 612
- DE-C- 3 729 117
- US-A- 4 897 998

## Beschreibung

### TECHNISCHES GEBIET

Bei der Erfindung wird ausgegangen von einer Gasturbinenanlage nach dem Oberbegriff der Patentansprüche 1 und 3. Die Erfindung betrifft auch ein Verfahren zum Hochfahren einer Gasturbinenanlage nach dem Oberbegriff des Patentanspruchs 6.

### STAND DER TECHNIK

Mit dem Oberbegriff der Patentansprüche 1, 3 und 6 nimmt die Erfindung auf einen Stand der Technik Bezug, wie er aus der DE-A1-3 900 612 bekannt ist. Dort wird eine Abgasturbinen-Generatoranlage für Schiffsdieselmotoren mit und ohne Wellengenerator beschrieben, bei der ein überschüssiger Teil der Dieselmotorabgase einer Nutzturbine zugeführt ist. Ein fremderregter Synchrongenerator speist die Energie in ein Bordnetz. Ein über einen steuerbaren Stromrichter bzw. Antiduktor ansteuerbarer Widerstand zur Belastung des Turbogenerators bei Lastausfall des Netzes ist so dimensioniert, dass er kleiner als die Netzreaktanz des Turbogenerators ist. Vor dem Anfahren der Turbine und Öffnen der Abgasklappe wird der Generator erregt, der Antiduktor gezündet und der Netzschalter geöffnet. Danach wird mit einer Frequenzregelung und Stellung des Belastungsstromes im Belastungswiderstand durch den Antiduktor die Frequenz des Turbogenerators an die des Bordnetzes herangefahren und zusynchronisiert.

Das Abgas-Bypassventil ist als Eckventil und nicht als Schnellventil ausgebildet. Beim Auftreten unerwünschter Überdrehzahlen wird eine Schnellschlussklappe geschlossen, die in der gleichen Turbinenzuleitung wie die Abgasklappe angeordnet ist. Da bei Schiffsturbinen mit Schweröl gearbeitet wird, kann es bei nur sporadischer Betätigung der Schnellschlussklappe zu einem Verkoken und somit zu einer Funktionsstörung kommen.

Zur Widerstandsbelastung des Synchrongenerators beim Hochfahren ist eine relativ teuere Steuerung für den Antiduktor erforderlich, der schon bei sehr niedrigen Frequenzen steuerbar sein muss, damit der noch nicht ans Bordnetz angeschlossene Generator nicht durchdreht.

Zum einschlägigen Stand der Technik wird ferner auf die EP-A2-0 398 138 verwiesen, bei der nicht benötigtes Abgas einer aufgeladenen Brennkraftmaschine über eine Nutzturbine zum Antrieb eines Asynchrongenerators verwendet wird. Dabei wird der Druck vor der Nutzturbine als Stellgrösse für ein relativ langsames und ein Schnellschliessorgan in der Gaszufuhrleitung zur Gasturbine sowie für ein im Notfall schnell öffnendes Bypassventil verwendet. Während der Beschleunigung verharren die Absperrorgane und das Bypassventil in einer Zwischenstellung, die eine weitere Beschleunigung des Generators auf dessen Nenndrehzahl gewährleistet. Damit der Generator ohne Stoss an das relativ schwache Schiffsnetz angekoppelt werden kann, muss das Heissgasventil stetig regelbar sein, so dass nahe der Nenndrehzahl die Beschleunigung ausreichend gering ist.

### DARSTELLUNG DER ERFINDUNG

Die Erfindung, wie sie in den Patentansprüchen 1, 3 und 6 definiert ist, löst die Aufgabe, eine Gasturbinenanlage der eingangs genannten Art derart weiterzuentwickeln, dass ein einfacherer Betrieb ermöglicht wird.

Ein Vorteil der Erfindung besteht darin, dass zur Steuerung der Gasturbine 2 schnelle Klappen bzw. Schnellventile ausreichen. Diese Ventile benötigen nur die Betriebsstellungen "auf" und "zu". Durch deren relativ häufige Betätigung wird ein Verkoken verhindert. Etwa vorhandene Ablagerungen auf den Dichtflächen werden durch die schnelle Bewegung mechanisch entfernt, so dass ein gewisser Selbstreinigungseffekt eintritt. Durch die schnellen Schaltvorgänge sind im Abgassammler kaum Druckänderungen zu merken, so dass der Verbrennungsmotor nicht gestört wird.

Zum Hochfahren der Synchronmaschine kann ein preiswerter, konventioneller Stromrichter verwendet werden, der erst in der Nähe der Nenndrehzahl der Synchronmaschine deren Regelung übernehmen muss.

### KURZE BESCHREIBUNG DER ZEICHNUNGEN

Die Erfindung wird nachstehend anhand von Ausführungsbeispielen erläutert. Es zeigen:
- Fig. 1: eine Gasturbinenanlage mit 2 Dieselmotoren und 2 Generatoren und
- Fig. 2: ein Drehzahl-Zeit-Diagramm zur Erläuterung des Hochfahrens eines Generators.

### WEGE ZUR AUSFÜHRUNG DER ERFINDUNG

Ein als Hauptmotor (5) betriebener Schiffsdieselmotor bzw. Verbrennungsmotor zum Antrieb einer Schiffsschraube erhält eingangsseitig Druckluft von einem Verdichter (2) und liefert ausgangsseitig über einen Abgasbehälter (6) Verbrennungsabgase über eine Laderturbine (4) in eine Gasabführleitung bzw. einen Kamin (1). Die Laderturbine (4) treibt über eine Welle (3) den Verdichter (2) an und bildet zusammen mit diesem und der Welle (3) einen Turbolader. Der Hauptmotor (5) hat eine Nennleistung von 40 MW und eine Nenndrehzahl von 93 U/min.

Überschüssige Verbrennungsabgase, die nicht zum Antrieb des Turboladers (2 - 4) benötigt werden, werden über ein 1. Absperrorgan bzw. eine Turbinenklappe bzw. eine schnelle 1. Klappe bzw. Schnellschliessklappe (9) einer Nutzturbine bzw. Gasturbine (10) zugeführt, die ausgangsseitig mit dem Kamin (1) in Verbindung steht. Die Gasturbine (10) hat eine Nennleistung von 1,2 MW und eine Nenndrehzahl von 1800 U/min. Für die Gasturbine (10) wirkt der Abgasbehälter (6) als Gasquelle. Diese ist zusätzlich über ein 2. Absperrorgan bzw. eine schnelle 2. Klappe bzw. Bypassklappe (8) mit dem Kamin (1) verbunden. Die beiden Klappen (8, 9) benötigen nur die beiden Betriebsstellungen "offen" und "zu". Die Stellzeit der beiden Klappen (8, 9) beträgt in Schliess- und Öffnungsrichtung jeweils 0,5 s. Wichtig ist, dass beim Abfahren bzw. Ausschalten sowie in einem Störfall, z. B. bei einem Lastwegfall, die Schliesszeit der Schnellschliessklappe (9) und die Öffnungszeit der Bypassklappe (8) < 1 s ist, so dass sich der Druck im Abgasbehälter (6) während der Stellzeit kaum ändert und der Hauptmotor (5) von einem Schaltvorgang praktisch nichts spürt und die Gasturbine (10) bei einem Störfall nicht durchdrehen kann. Der Druck in dem Abgasbehälter (6) soll von einem Stationärdruck um nicht mehr als 20 %, vorzugsweise um nicht mehr als 10 % abweichen. Derartige Schnellklappen (8, 9) sind z. B. von der deutschen Firma Ohl-Industrietechnik Theodor Ohl-AG, Blumenröder Strasse 3, D 6250 Limburg/Lahn, unter der Bezeichnung "Ohl-Schnellschaltklappen" erhältlich. Die beiden Klappen (8, 9) werden, ebenso wie ein Laststromrichter (15), von einer Regel- und Steuereinrichtung (14) gesteuert.

Es genügt, wenn die Turbinenklappe (9) langsamer öffnet und die Bypassklappe (8) langsamer schliesst, wobei die jeweilige Stellzeit im Bereich von 1 s - 5 s liegen kann. Vorteilhaft ist es, wenn beim Start der Gasturbine (10) die Turbinenklappe (9) um das 0,3fache ihrer Stellzeit verzögert zu öffnen beginnt im Vergleich zum Schliessbeginn der Bypassklappe (8), da sich dadurch die Druckschwankungen im Abgasbehälter (6) innerhalb der zulässigen Grenzwerte halten lassen.

Die Gasturbine (10) ist über ein Getriebe (11) und eine Kupplung (12) mechanisch mit dem Rotor eines Generators bzw. einer 3phasigen Synchronmaschine (16) verbunden, die statorseitig elektrisch über einen Schalter (SC) an ein Bordnetz bzw. Wechselspannungsnetz (18) mit einer Wechselspannung von 440 V und einer Nennfrequenz von 60 Hz anschliessbar ist. Die Statorwicklungen der Synchronmaschine (16) sind am oder vor Beginn des Hochfahrens der Synchronmaschine (16) über Schaltelemente bzw. Anfahrschalter (S1 - Sn) an Anfahrwiderstände (R1 - Rn) angeschlossen. Die Anfahrschalter (S1 - Sn) können z. B. Schütze oder Halbleiterventile sein. Zusätzlich sind die Statorwicklungen der Synchronmaschine (16) über eine Kommutierungsdrossel (L) und mindestens einen Lastwiderstand (R) mit dem Laststromrichter (15) verbunden, der nur für einen Frequenzbereich in der Nähe der Nennfrequenz des Wechselspannungsnetzes (18), d. h. für einen Frequenzbereich von 54 Hz - 66 Hz, ausgelegt zu sein braucht. Als Laststromrichter (15) kann ein Drehstromsteller oder ein Stromrichter für Gleichstromantriebe verwendet werden.

Wird als Laststromrichter (15) ein stromregelnder Stromrichter verwendet, so kann dessen Gleichstromseite kurzgeschlossen werden und die Kommutierungsdrossel (L) kleiner ausgelegt sein als sonst. Als Vorteil ist dabei eine erhöhte Entkopplung durch den Lastwiderstand (R) vom Wechselspannungsnetz (18) anzusehen, so dass Störeinflüsse durch Oberschwingungen verringert werden.

Die beim Start mit allen Anfahrwiderständen (R1 - Rn) belastete Synchronmaschine (16) erreicht bei Vollbeaufschlagung der Gasturbine (10) mit Nennleistung eine Drehzahl (n) im zulässigen Frequenzbereich des Stromrichters (15). Ist die dazu notwendige Gasturbinenleistung zu klein, so können einzelne Anfahrwiderstände (R1 - Rn) nacheinander abgeschaltet werden. Nach dem Hochlauf übernimmt der Laststromrichter (15) die Drehzahlregelung und Synchronisation der Synchronmaschine (16) mit dem Wechselspannungsnetz (18). Für die Drehzahlregelung mittels der Regel- und Steuereinrichtung (14), welche den Laststromrichter (15) steuert, kann ein üblicherweise dem Stromrichter (15) zugehöriger Drehzahlregler mit unterlagertem Stromregler verwendet werden.

Sollte der Laststromrichter (15) einmal ausfallen, so kann ein Schütz bzw. Sternpunktschalter (SD) die Eingangsseite des Laststromrichters (15) kurzschliessen und so die Synchronmaschine (16) mit dem ganzen Lastwiderstand (R) belasten und somit als elektrische Bremse wirken.

Da der elektrische Leistungsbedarf eines Schiffes normalerweise höher als die maximale Leistung der Gasturbine (10) ist, wird zusätzlich zu dem Hauptmotor (5) ein weiterer Dieselmotor bzw. Hilfsmotor (19) vorgesehen, der ebenfalls einen mit dem Kamin (1) in Verbindung stehenden Turbolader (2 - 4) aufweist und mechanisch mit dem Rotor eines Hilfsgenerators (20) verbunden ist, welcher statorseitig über einen Schalter (SA) an das Wechselspannungsnetz (18) anschliessbar ist. Ein Überschuss an elektrischer Energie kann über einen nicht dargestellten Elektromotor an die Schiffswelle abgegeben werden.

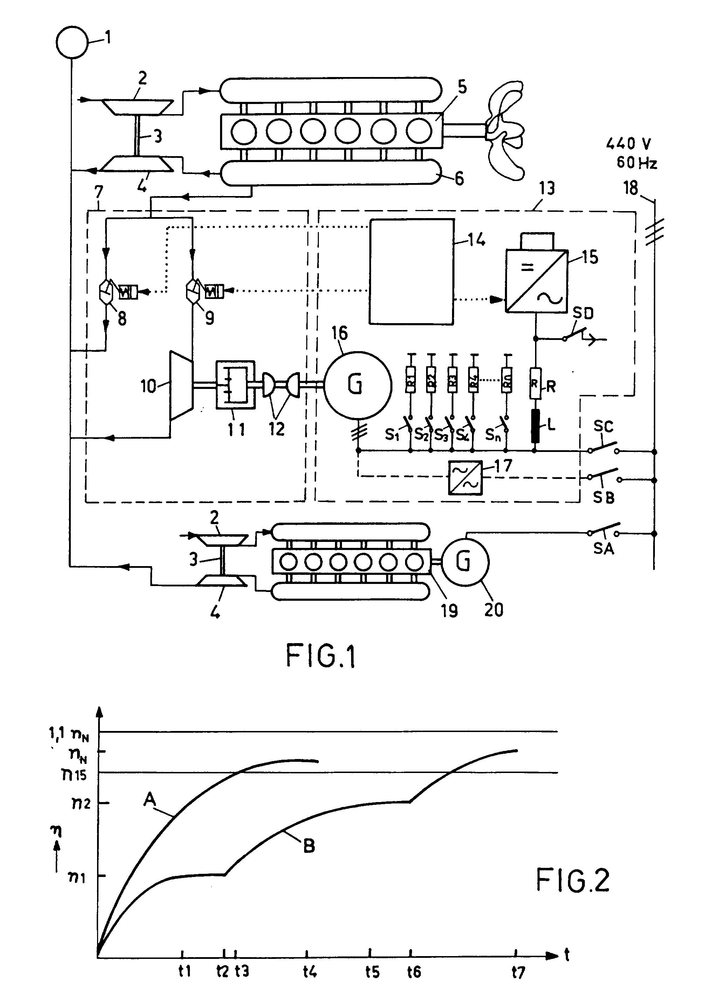

Nachfolgend soll der "Gasstart" der Synchronmaschine (16) in Verbindung mit einem Drehzahl-Zeit-Diagramm in Fig. 2 erläutert werden. In Fig. 2 sind auf der Abszisse eine Zeit (t) und auf der Ordinate eine Drehzahl (n) der Synchronmaschine (16) aufgetragen. (n_{N}) bezeichnet die Nenndrehzahl der Synchronmaschine (16), mit n_{N} = 1800 U/min, entsprechend der Nennfrequenz des Wechselspannungsnetzes (18) von 60 Hz. Eine Grenzdrehzahl (n15) entspricht der unteren Grenzfrequenz des Betriebsbereiches des Laststromrichters (15) von z. B. 54 Hz.

Im Stillstand und im unteren Drehzahlbereich wird die Synchronmaschine (16) rotorseitig fremderregt. Ihre Statorklemmen sind mit allen Anfahrwiderständen (R1 - Rn) verbunden, die zumindest kurzzeitig die volle Leistung der Gasturbine (10) aufnehmen können. Die an den Statorklemmen abgegebene Spannung ist in 1. Näherung proportional zur Drehzahl (n). Die in den Anfahrwiderständen (R1 - Rn) umgesetzte Leistung steigt quadratisch mit der Spannung.

Der Startvorgang wird eingeleitet, indem die schnelle Turbinenklappe (9) geöffnet und gleichzeitig die schnelle Bypassklappe (8) geschlossen wird. Der so freigegebene Gasstrom beschleunigt die Turbinen-Generator-Einheit (10 - 16) bis sich bei einer 1. Gleichgewichtsdrehzahl (n1) zu einem Zeitpunkt (t1) ein Gleichgewichtszustand zwischen der zugeführten Gasleistung und der in den Anfahrwiderständen (R1 - Rn) in Wärme umgewandelten elektrischen Leistung einstellt, vgl. Kurve (B).

Liegt dieser Gleichgewichtszustand bei einer Drehzahl (n) zwischen 0,9- und 1,1facher Nenndrehzahl (n_{N}), vgl. Kurve (A), so kann der Laststromrichter (15) ab einem Zeitpunkt (t3), bei dem die Grenzdrehzahl (n15) erreicht ist, die weitere Regelung übernehmen.

Reicht die Gasleistung nicht aus, um die Turbinen-Generator-Einheit (10 - 16) in den vorgegebenen Drehzahlbereich zu beschleunigen, so wird eine Widerstandsstufe von mehreren Anfahrwiderständen (R1 - Rn) oder ein Anfahrwiderstand, z. B. (R1), zu einem Zeitpunkt (t2), 10 s nach dem Zeitpunkt (t1), herausgenommen, vgl. Kurve (B). Die herausgenommene Widerstandsstufe darf höchstens so gross sein, dass der neue Gleichgewichtszustand bei einer maximal zulässigen 1,1fachen Nenndrehzahl (n_{N}) liegt. Dieser Vorgang kann sich öfter wiederholen, bis die Turbinen-Generator-Einheit (10 - 16) auch bei kleiner Gasleistung auf annähernd Nenndrehzahl (n_{N}) beschleunigt wird. Im Falle der Kurve (B) wird bei einer 2. Gleichgewichtsdrehzahl (n2) zu einem Zeitpunkt (t5) ein 2. Gleichgewichtszustand erreicht. 10 s später wird zu einem Zeitpunkt (t6) ein weiterer Anfahrwiderstand, z. B. (R2), abgeschaltet und zu einem Zeitpunkt (t7) ein Gleichgewichtszustand innerhalb des Regelbereiches des Laststromrichters (15) erreicht. Mittels des Laststromrichter (15) kann nun die Drehzahl (n) stufenlos und schnell geregelt werden. Eine derartige Drehzahlregelung ist geeignet, die Synchronmaschine (16) auf das Wechselspannungsnetz (18) zuzusynchronisieren und eine definierte Wirklastverteilung im Dauerbetrieb zu gewährleisten.

Das Abschalten einer Widerstandsstufe oder eines Anfahrwiderstandes (R1 - Rn) kann davon abhängig gemacht werden, dass die zeitliche Änderung der Drehzahl (n) kleiner als ein vorgebbarer Grenzwert von z. B. 0,5 Hz/s ist.

Besonders vorteilhaft ist es, wenn für den Hochlauf der Synchronmaschine (16) die Anfahrwiderstände (R1 - Rn) auf den Laststromrichter (15) umgeschaltet werden (nicht dargestellt) und dann die Stelle des Lastwiderstandes (R) einnehmen und diesen ersetzen können.

Es versteht sich, dass ein derartiges Hochfahren der Synchronmaschine (16) mit einem elektrischen Anlagenteil (13) mit Anfahrwiderständen (R1 - Rn) auch dann anwendbar ist, wenn ein mechanischer Anlagenteil (7) der Turbinen-Generator-Einheit (10 - 16) mehr als 2 Klappen (8, 9) aufweist.

Das Wechselspannungsnetz (18) kann eine andere als die angegebene Wechselspannung und z. B. eine Netzfrequenz von 50 Hz aufweisen. Auch die Leistungen von Hauptmotor (5), Hilfsmotor (19) und Gasturbine (10) können andere als die oben angegebenen Werte aufweisen.

Anstelle des oben beschriebenen Gasstartes kann auch ein Stromrichterstart mittels eines Startumrichters (17) vorgesehen sein, der über einen Schalter (SB) an das Wechselspannungsnetz (18) anschliessbar ist, wie in Fig. 1 gestrichelt angedeutet. Dabei wird die Synchronmaschine (16) als Motor verwendet, der die Gasturbine (10) bei geschlossener Turbinenklappe (9) auf Nenndrehzahl (n_{N}) beschleunigt. Die Turbinen-Generator-Einheit (10 - 16) kann so bei guter Regelbarkeit risikoarm hochgefahren werden, da bei einer Unterbrechung in der Leistungsübertragung lediglich die Beschleunigung aufhört und die Turbinen-Generator-Einheit (10 - 16) von der natürlichen Reibung gebremst ausläuft.

## Patentansprüche

1. Gasturbinenanlage
a) mit einer Gasturbine (10), die mit einer Synchronmaschine (16) mechanisch in Wirkverbindung steht,
b) welche Gasturbine (10) einerseits über ein 1. Absperrorgan (9) mit einer Gasquelle (6) und
c) andererseits mit einer Gasabführleitung (1) in Verbindung steht,
d) wobei die Gasquelle (6) über ein 2. Absperrorgan (8) mit dieser Gasabführleitung (1) in Verbindung steht, dadurch gekennzeichnet,
e) dass zu diesen 1. und 2. Absperrorganen (9, 8) kein weiteres Absperrorgan in Reihe geschaltet ist,
f) dass eine Schliesszeit des 1. Absperrorgans (9) < 1 s und
g) dass eine Öffnungszeit des 2. Absperrorgans (8) < 1 s ist.

2. Gasturbinenanlage nach Anspruch 1 dadurch gekennzeichnet,
a) dass die Gasquelle (6) ein Abgasbehälter eines Verbrennungsmotors (5) ist,
b) dass der Druck des Abgasbehälters (6) von einem Stationärdruck, welcher sich bei offenem 2. Absperrorgan (8) und geschlossenem 1. Absperrorgan (9) einstellt, um nicht mehr als 20 %,
c) insbesondere, um nicht mehr als 10 % abweicht.

3. Gasturbinenanlage
a) mit einer Gasturbine (10), die mit einer Synchronmaschine (16) mechanisch in Wirkverbindung steht,
b) wobei der Stator der Synchronmaschine (16) mit einer Reihenschaltung mindestens eines Lastwiderstandes (R) und eines steuerbaren Stromrichters (15) elektrisch in Wirkverbindung steht,
dadurch gekennzeichnet,
c) dass der Stator der Synchronmaschine (16) zusätzlich mit mindestens einer Reihenschaltung aus einem Anfahrwiderstand (R1 - Rn) und einem Schalter (S1 - Sn) in Wirkverbindung steht.

4. Gasturbinenanlage nach Anspruch 1 oder 2, wobei der Stator der Synchronmaschine (16) mit einer Reihenschaltung mindestens eines Lastwiderstandes (R) und eines steuerbaren Stromrichters (15) elektrisch in Wirkverbindung steht,
dadurch gekennzeichnet,
dass der Stator der Synchronmaschine (16) zusätzlich mit mindestens einer Reihenschaltung aus einem Anfahrwiderstand (R1 - Rn) und einem Schalter (S1 - Sn) in Wirkverbindung steht.

5. Gasturbinenanlage nach Anspruch 3 oder 4, dadurch gekennzeichnet, dass der Anfahrwiderstand oder die Anfahrwiderstände leistungsmässig so bemessen sind, dass deren summarische Aufnahmewirkleistung grösser als eine grösstmögliche Wirkklemmenleistung der Synchronmaschine (16) im Betrieb ist.

6. Verfahren zum Hochfahren einer Gasturbinenanlage
a) mit einer Gasturbine (10), die mit einer Synchronmaschine (16) mechanisch in Wirkverbindung steht,
b) wobei der Stator der Synchronmaschine (16) mit einer Reihenschaltung mindestens eines Lastwiderstandes (R) und eines steuerbaren Stromrichters (15) elektrisch in Wirkverbindung steht,
dadurch gekennzeichnet,
c) dass am oder vor Beginn des Hochfahrens der Stator der Synchronmaschine (16) an mindestens einen Anfahrwiderstand (R1 - Rn) angeschlossen und damit elektrisch belastet wird und
d) dass bei Erreichen einer von der momentanen Gasleistung in der Gasturbine (10) abhängigen Gleichgewichtsdrehzahl (n1, n2) der Synchronmaschine (16), entsprechend einem Leistungsgleichgewicht, mindestens ein Anfahrwiderstand (R1 - Rn) abgeschaltet wird.

7. Verfahren nach Anspruch 6, dadurch gekennzeichnet, dass in Abhängigkeit vom Erreichen einer Grenzdrehzahl (n15) der Synchronmaschine (16) der Stromrichter (15) eingeschaltet wird und die Drehzahlregelung übernimmt, wobei die Grenzdrehzahl (n15) der unteren Grenzfrequenz des Betriebsbereiches des Stromrichters (15) entspricht.

8. Verfahren nach Anspruch 6 oder 7, dadurch gekennzeichnet,
a) dass bei mehreren zunächst eingeschalteten Anfahrwiderständen (R1 - Rn) die einzelnen Anfahrwiderstände (R1 - Rn) zur Erhöhung der Drehzahl (n) der Synchronmaschine (16) nacheinander abgeschaltet werden,
b) insbesondere in Abhängigkeit vom Erreichen eines Leistungsgleichgewichts.

9. Verfahren nach einem der Ansprüche 6 bis 8, dadurch gekennzeichnet, dass in einem Störfall des Stromrichters (15) der mindestens eine in Reihe mit dem Stromrichter (15) geschaltete Lastwiderstand (R) voll an den Stator der Synchronmaschine (16) angeschlossen wird.

10. Verfahren nach einem der Ansprüche 6 bis 9, dadurch gekennzeichnet, dass die Gasturbine (10) über ein 1. Absperrorgan (9) mit einer Gasquelle (6) und wobei die Gasquelle (6) über ein 2. Absperrorgan (8) mit einer Gasabfühleitung (1) verbunden ist, und daß der Öffnungsbeginn des 1. Absperrorgans (9) zeitlich verzögert wird gegenüber dem Schliessbeginn des 2. Absperrorgans.

## Claims

1. Gas turbine system
a) having a gas turbine (10) which is mechanically effectively connected to a synchronous machine (16),
b) which gas turbine (10) is connected on the one hand via a 1st shut-off device (9) to a gas source (6) and
c) on the other hand is connected to a gas exhaust line (1),
d) the gas source (6) being connected via a 2nd shut-off device (8) to said gas exhaust line (1), characterized
e) in that no further shut-off device is connected in series with said 1st and 2nd shut-off devices (9, 8),
f) in that a closing time of the 1st shut-off device (9) is less than 1 s and
g) in that an opening time of the 2nd shut-off device (8) is less than 1 s.

2. Gas turbine system according to Claim 1, characterized
a) in that the gas source (6) is an exhaust gas container of an internal-combustion engine (5),
b) in that the pressure of the exhaust gas container (6) deviates from a steady-state pressure which is set when the 2nd shut-off device (8) is open and the 1st shut-off device (9) is closed by not more than 20%,
c) in particular does not deviate by more than 10%.

3. Gas turbine system
a) having a gas turbine (10) which is mechanically effectively connected to a synchronous machine (16),
b) the stator of the synchronous machine (16) being electrically effectively connected to a series circuit comprising at least one load resistor (R) and a controllable converter (15), characterized
c) in that the stator of the synchronous machine (16) is additionally effectively connected to at least one series circuit comprising a starting resistor (R1 - Rn) and a switch (S1 - Sn).

4. Gas turbine system according to Claim 1 or 2, the stator of the synchronous machine (16) being electrically effectively connected to a series circuit comprising at least one load resistor (R) and a controllable converter (15), characterized in that the stator of the synchronous machine (16) is additionally effectively connected to at least one series circuit comprising a starting resistor (R1 - Rn) and a switch (S1 - Sn).

5. Gas turbine system according to Claim 3 or 4, characterized in that the starting resistor or the starting resistors is or are dimensioned in terms of power such that their total real power consumption is greater than a maximum possible real terminal power of the synchronous machine (16) in operation.

6. Method for accelerating a gas turbine system
a) having a gas turbine (10) which is mechanically effectively connected to a synchronous machine (16),
b) the stator of the synchronous machine (16) being electrically effectively connected to a series circuit comprising at least one load resistor (R) and a controllable converter (15),
characterized
c) in that the stator of the synchronous machine (16) is connected to at least one starting resistor (R1 - Rn) at or before the start of the acceleration, and is hence electrically loaded, and
d) in that, on the synchronous machine (16) reaching an equilibrium speed (n1, n2) which is dependent on the instantaneous gas power in the gas turbine (10) and corresponds to a power equilibrium, at least one starting resistor (R1 - Rn) is disconnected.

7. Method according to Claim 6, characterized in that the converter (15) is switched on as a function of the synchronous machine (16) reaching a limiting speed (n15) and takes over the speed control, the limiting speed (n15) corresponding to the lower limiting frequency of the operating band of the converter (15).

8. Method according to Claim 6 or 7, characterized
a) in that, in the case of a plurality of starting resistors (R1 - Rn) which are initially switched on, the individual starting resistors (R1 - Rn) are successively disconnected in order to increase the speed (n) of the synchronous machine (16),
b) in particular as a function of reaching a power equilibrium.

9. Method according to one of Claims 6 to 8, characterized in that, in the event of a disturbance in the converter (15), the at least one load resistor (R) which is connected in series with the converter (15) is fully connected to the stator of the synchronous machine (16).

10. Method according to one of Claims 6 to 9, characterized in that the gas turbine (10) is connected via a 1st shut-off device (9) to a gas source (6), the gas source (6) being connected via a 2nd shut-off device to a gas exhaust line (1), and in that the start of opening of the 1st shut-off device (9) is delayed in time with respect to the start of closing of the 2nd shut-off device.

## Revendications

1. Installation de turbine à gaz
a) avec une turbine à gaz (10), qui est en liaison mécanique active avec une machine synchrone (16),
b) cette turbine à gaz (10) étant d'une part en liaison avec une source de gaz (6) à travers un premier organe d'arrêt (9) et
c) d'autre part en liaison avec un tuyau d'échappement (1),
d) la source de gaz (6) étant en liaison avec ce tuyau d'échappement (1) à travers un second organe d'arrêt (8),
caractérisée en ce que,
e) aucun autre organe d'arrêt n'est branché en série avec ces premier et second organe d'arrêt (9, 8),
f) le temps de fermeture du premier organe d'arrêt (9) est < 1 s et
g) le temps d'ouverture du second organe d'arrêt (8) est < 1 s.

2. Installation de turbine à gaz selon la revendication 1 caractérisée en ce que
a) la source de gaz (6) est un pot d'échappement d'un moteur à combustion (5) et,
b) la pression du pot d'échappement (6) ne s'écarte pas de plus de 20 % d'une pression stationnaire qui s'établit avec le second organe d'arrêt (8) ouvert et avec le premier organe d'arrêt (9) fermé, et
c) ne s'écarte pas en particulier de plus de 10%.

3. Installation de turbine à gaz
a) avec une turbine à gaz (10), qui est en liaison mécanique active avec une machine synchrone (16),
b) le stator de la machine synchrone (16) étant en liaison électrique active avec un branchement en série d'au moins une résistance de charge (R) et d'un convertisseur de courant (15) contrôlable,
caractérisée en ce que
c) de plus le stator de la machine synchrone (16) est en liaison active avec au moins un branchement en série d'une résistance de démarrage (R1 - Rn) et d'un interrupteur (S1 - Sn).

4. Installation de turbine à gaz selon l'une quelconque des revendications 1 ou 2, le stator de la machine synchrone (16) étant en liaison électrique active avec un branchement en série d'au moins une résistance de charge (R) et d'un convertisseur de courant (15) contrôlable,
caractérisée en ce que
de plus le stator de la machine synchrone (16) est en liaison active avec au moins un branchement en série d'une résistance de démarrage (R1 - Rn) et d'un interrupteur (S1 - Sn).

5. Installation de turbine à gaz selon l'une quelconque des revendications 3 ou 4, caractérisée en ce que la résistance de démarrage ou les résistances de démarrage sont dimensionnées du point de vue puissance de sorte que la somme de leurs puissances utiles admissibles soit supérieure à la puissance utile la plus élevée possible aux bornes de la machine synchrone (16) en fonctionnement.

6. Procédé pour la mise en régime d'une installation de turbine à gaz
a) avec une turbine à gaz (10), qui est en liaison mécanique active avec une machine synchrone (16),
b) le stator de la machine synchrone (16) étant en liaison électrique active avec un branchement en série d'au moins une résistance de charge (R) et d'un convertisseur de courant (15) contrôlable,
caractérisé en ce que
c) au moment du démarrage de la mise en régime ou avant, le stator de la machine synchrone (16) est connecté à au moins une résistance de démarrage (R1 - Rn) et ainsi chargé électriquement et,
d) au moins une résistance de démarrage (R1 - Rn) est débranchée au moment d'atteindre un régime d'équilibre (n1, n2) de la machine synchrone (16) dépendant de la puissance instantanée du gaz dans la turbine à gaz (10), correspondant à un équilibre de puissance.

7. Procédé selon la revendication 6 caractérisé en ce que, dépendant du fait d'atteindre un'régime limite (n15) de la machine synchrone (16), le convertisseur de courant (15) est enclenché et prend en charge la régulation du régime, le régime limite (n15) correspondant à la fréquence limite inférieure de la plage de fonctionnement du convertisseur de courant (15).

8. Procédé selon l'une quelconque des revendications 6 ou 7 caractérisé en ce que
a) lorsque plusieurs résistances de démarrages (R1 - Rn) sont initialement enclenchées, les résistances de démarrage individuelles (R1 - Rn) sont débranchées les unes après les autres pour élever le régime (n) de la machine synchrone (16),
b) dépendant en particulier du fait d'atteindre un équilibre de puissance.

9. Procédé selon l'une quelconque des revendications 6 à 8 caractérisé en ce qu'en cas de perturbation du convertisseur de courant (15), au moins une des résistances de charge (R) connectée en série avec le convertisseur de courant (15) est totalement raccordée au stator de la machine synchrone (16).

10. Procédé selon l'une quelconque des revendications 6 à 9 caractérisé en ce que la turbine à gaz (10) est reliée à travers un premier organe d'arrêt (9) à une source de gaz (6), la source de gaz (6) étant reliée à travers un second organe d'arrêt (8) à un tuyau d'échappement (1), et en ce que le début de l'ouverture du premier organe d'arrêt (9) est retardé dans le temps par rapport au début de la fermeture du second organe d'arrêt.
